# EUROPEAN PATENT APPLICATION

(11) **EP 4 653 223 A2**
(43) Date of publication of application: **26.11.2025**
(21) Application number: 25170843.4
(22) Date of filing: 15.04.2025
(51) Int. Cl.: B60K 15/05

(54) **LID STRUCTURE**

(30) Priority: 24.05.2024 JP 2024084537
(71) Applicant: Suzuki Motor Corporation, Shizuoka 432-8611 (JP)
(72) Inventor: KUNO, Masaaki, Hamamatsu-shi (JP)
(74) Representative: Haseltine Lake Kempner LLP

(57) **Abstract**

A lid structure (30) for a vehicle (1) in which a fuel tank or a battery (26) is provided. The lid structure includes a tray (32) configured to cover a periphery of a fuel filler of the fuel tank or a connection port (27) of the battery, and a lid (41) configured to open and close an opening of the tray through which the fuel filler or the connection port (27) is exposed. A recess (53) into which an open end of the lid (41) enters is formed on a side opposite to the tray (32) across a partition wall (54), and a protrusion (62) protrudes from the partition wall (54) to an inside of the recess (53) to lock the lid (41).

## Description

### TECHNICAL FIELD

The present disclosure relates to a lid structure.

### BACKGROUND ART

A straddle-type vehicle or the like including a fuel lid that covers the fuel filler of a fuel tank is known (for example, see JP2004-175312A). The base end portion of the fuel lid described in JP2004-175312A is swingably supported on a fuel tray, and a hook piece is provided at the open end of the fuel lid. A protrusion of a locking mechanism protrudes inward from the opening edge of the fuel tray, and the fuel lid is locked by hooking the hook piece of the fuel lid onto the protrusion of the locking mechanism. The protrusion of the locking mechanism comes off from the hook piece of the fuel lid, whereby the fuel lid is unlocked.

In the lid structure described in JP2004-175312A, it is necessary to ensure a sufficient space in the fuel tray such that the hand does not come into contact with the protrusion when the fuel filler cap is attached or detached. However, even if a space is ensured in the fuel tray, the hand may come into contact with the protrusion of the locking mechanism that protrudes from the opening edge of the fuel tray, and the workability may deteriorate. Such a problem also occurs when an electrical connector is connected to a connection port such as a charging port or a power supply port.

### SUMMARY OF INVENTION

Aspect of non-limiting embodiments of the present disclosure relates to provide a lid structure capable of improving the workability by ensuring a working space inside a tray.

Aspects of certain non-limiting embodiments of the present disclosure address the features discussed above and/or other features not described above. However, aspects of the non-limiting embodiments are not required to address the above features, and aspects of the non-limiting embodiments of the present disclosure may not address features described above.

According to an aspect of the present disclosure, there is provided a lid structure (30) for a vehicle (1) in which a fuel tank or a battery (26) is provided, the lid structure including:
a tray (32) configured to cover a periphery of a fuel filler of the fuel tank or a connection port (27) of the battery; and
a lid (41) configured to open and close an opening of the tray through which the fuel filler or the connection port (27) is exposed,
in which a recess (53) into which an open end of the lid (41) enters is formed on a side opposite to the tray (32) across a partition wall (54), and a protrusion (62) protrudes from the partition wall (54) to an inside of the recess (53) to lock the lid (41).

### BRIEF DESCRIPTION OF DRAWINGS

Exemplary embodiment(s) of the present invention will be described in detail based on the following figures, wherein:
FIG. 1 is a side view of a straddle-type vehicle according to the present embodiment;
FIG. 2 is a rear view of a lid structure according to the present embodiment;
FIG. 3 is a cross-sectional view of the lid structure in FIG. 2 taken along a line A-A;
FIG. 4 is a view of the lid structure according to the present embodiment as viewed from a direction facing the lid;
FIG. 5A is an operation transition view of the locking operation of the lid according to the present embodiment; and
FIG. 5B is an operation transition view of the locking operation of the lid according to the present embodiment.

### DESCRIPTION OF EMBODIMENTS

A fuel tank or a battery is provided in a vehicle according to an aspect of the present disclosure. In a lid structure of the vehicle, a periphery of a fuel filler of the fuel tank or a connection port of the battery is covered with a tray, and an opening of the tray through which the fuel filler or the connection port is exposed is opened and closed by a lid. A recess into which an open end of the lid enters is formed on a side opposite to the tray across a partition wall, and a protrusion protrudes from the partition wall to an inside of the recess, so that the open end of the lid is locked by the protrusion outside the tray. Since the protrusion does not protrude to the inside of the tray, the hand of the operator or the like does not come into contact with the protrusion at the time of attaching and detaching the fuel filler cap or connecting the electrical connector, and the workability is improved. The protrusion does not protrude to the inside of the tray, and thus a large working space can be ensured.

### Embodiment

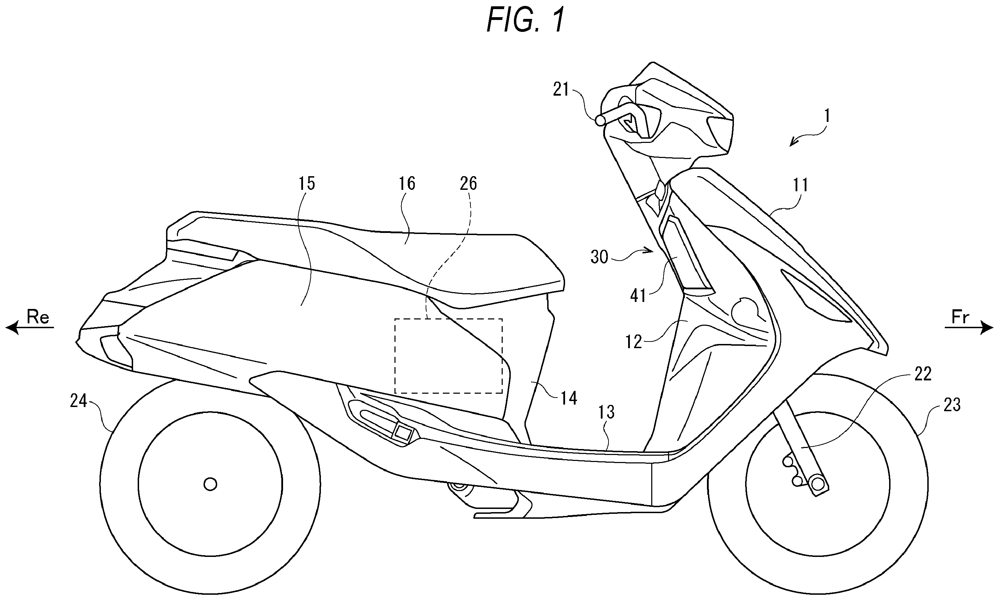

Hereinafter, a straddle-type vehicle according to an embodiment will be described with reference to the accompanying drawings. FIG. 1 is a side view of the straddle-type vehicle according to the present embodiment. In the following drawings, an arrow Fr indicates a vehicle front side, an arrow Re indicates a vehicle rear side, an arrow L indicates a vehicle left side, and an arrow R indicates a vehicle right side.

As shown in FIG. 1, a straddle-type vehicle 1 is equipped with various covers that are vehicle body exteriors on an underbone vehicle body frame (not shown). The straddle-type vehicle 1 is provided with a front cover 11 on the vehicle front side, and a front leg shield 12, which protects feet of a rider, on the rear side of the front cover 11. A floor board 13 extends rearward from the lower end of the front leg shield 12, and a body cover 14 and a pair of side covers 15 are provided on the rear side of the floor board 13. A seat 16 is provided on the upper portion of the side cover 15, and a battery 26 is accommodated below the seat 16.

A handle 21 is provided on the upper side of the front cover 11, and a front wheel 23 is rotatably supported via a pair of front forks 22 on the lower side of the front cover 11. A swing arm (not shown) with a motor (not shown) is provided on the lower side of the side cover 15. The swing arm is swingably coupled to the vehicle body frame. A rear wheel 24 is rotatably supported on the rear portion of the swing arm. The swing arm has a left side surface covered with a swing arm cover (not shown). Power is transmitted from the motor to the rear wheel 24 via a belt-type continuously variable transmission (not shown) inside the swing arm cover.

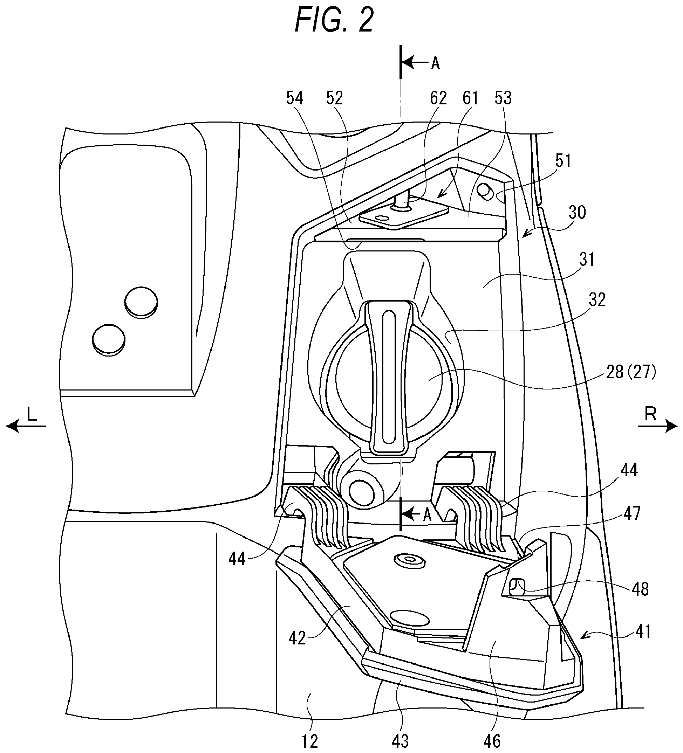

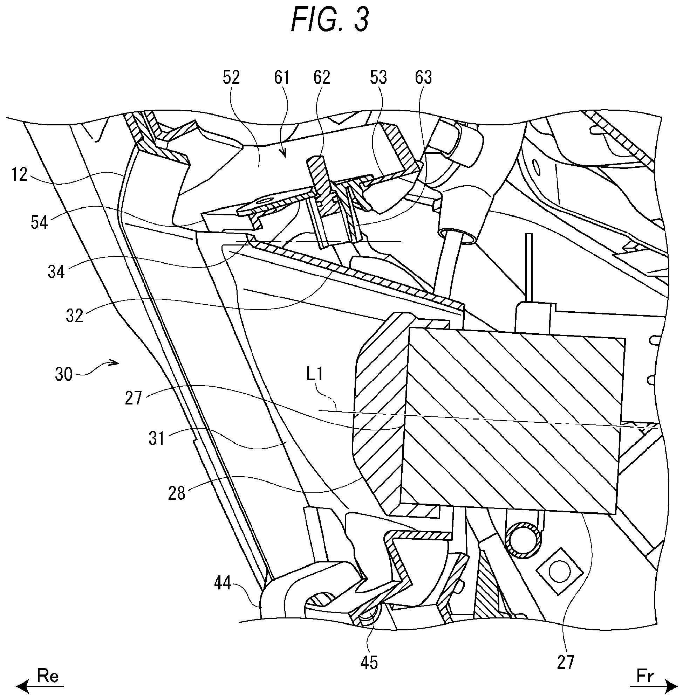

A tray 32 (see FIG. 2) that accommodates a charging port 27 (see FIG. 2) for the battery 26 is provided on the upper right side of the front leg shield 12. A lid 41 is coupled to the lower side portion of the opening edge of the tray 32 so as to be openable downward. The opening of the lid 41 is closed, thereby preventing the exposure of the charging port 27. In such a lid structure 30, a locking mechanism 61 (see FIG. 3) is provided above the tray 32. The locking mechanism 61 is provided with a lock pin for hooking the open end of the lid 41. The lid 41 is locked by being hooked to the lock pin, and the lock is released by removing the lid 41 from the lock pin.

A lock pin of a general locking mechanism protrudes to the inside of the tray. Considering that the hand enters the inside of the tray when the electrical connector is connected to the charging port, a large space for the tray is ensured such that the lock pin does not come into contact with the hand. However, even if a large space for the tray is ensured, the lock pin that protrudes inward from the tray may come into contact with the hand. Therefore, in the present embodiment, a recess into which the open end of the lid enters is provided outside the tray, and the lid is locked outside the tray by a lock pin that protrudes to the inside of the recess.

The lid structure of the straddle-type vehicle will be described with reference to FIGS. 2 and 3. FIG. 2 is a rear view of the lid structure according to the present embodiment. FIG. 3 is a cross-sectional view of the lid structure in FIG. 2 taken along a line A-A.

As shown in FIGS. 2 and 3, the upper right side of the front leg shield 12 is recessed in a stepped shape, and the bottom surface of this step portion 31 is recessed forward to form the tray 32. The charging port 27 is exposed from an inner bottom surface 33 of the tray 32, and a waterproof cap 28 is detachably attached to the charging port 27. A battery cable extends from the charging port 27 toward the battery 26 (see FIG. 1) at the vehicle rear portion, and the charging port 27 is connected to the battery 26 via the battery cable. The battery 26 is charged by connecting the electrical connector of the external power supply to the charging port 27. The periphery of the charging port 27 is covered with the tray 32, which prevents the foreign matter such as dust from entering the vehicle body.

The waterproof cap 28 (the charging port 27) is exposed rearward from the opening of the tray 32. The lid 41 configured to cover the opening of the tray 32 from the rear is provided below the tray 32. The lid 41 is coupled to the front leg shield 12 on the lower side of the tray 32 so as to be openable downward. The lid 41 includes a lid body 42 corresponding to the outer edge shape of the recess of the step portion 31 and a lid cover 43 that is provided on the back surface of the lid body 42. A pair of lid arms 44 extend in a C shape from the lower portion of the lid body 42. The distal end portions of the pair of lid arms 44 are coupled to the front leg shield 12 via a rotation shaft 45.

The lid 41 is swung up and down about the rotation shaft 45 as a fulcrum so as to take a standing posture in which the tray 32 is covered and a lying down posture in which the tray 32 is opened. In the closed state of the lid 41, the lid 41 is locked in the standing posture by the lock pin 62 of the locking mechanism 61. The tray 32 and the charging port 27 are covered with the lid cover 43, and the design is improved. In the open state of the lid 41, a restricting piece (not shown) of the lid 41 is hooked to the front leg shield 12, and the lid 41 is supported in the lying down posture. Since the lid 41 is laid down below the opening of the tray 32, the waterproof cap 28 is completely exposed from the opening of the tray 32 in the rear view, and is easily attached and detached.

The open end side of the lid body 42 protrudes to form a protruding portion 46. The protruding direction of the protruding portion 46 is substantially orthogonal to the flat surface portion of the lid body 42. In the open state of the lid 41, the distal end of the protruding portion 46 faces upward. An inclined surface 47 that is inclined forward (the back side of the paper surface of FIG. 2) is formed downward from the distal end of the protruding portion 46. In the open state of the lid 41, one side surface of the protruding portion 46 faces rearward (the front side of the paper surface of FIG. 2). A lock hole 48 into which the lock pin 62 of the locking mechanism 61 enters is formed in the one side surface of the protruding portion 46. The base end side of the protruding portion 46 is formed thick to increase the rigidity of the protruding portion 46.

In the step portion 31 of the front leg shield 12, an opening 51 having a substantially trapezoidal shape in the rear view is formed above the tray 32. An inner member 52 is provided inside the front leg shield 12. The inner member 52 is exposed from the substantially trapezoidal opening 51 of the step portion 31 of the front leg shield 12. The inner member 52 is formed with a recess 53 into which the protruding portion 46 on the open end side of the lid 41 enters. A partition wall 54 is formed by the upper wall of the tray 32 and the lower wall of the recess 53. The inner space of the tray 32 and the inner space of the recess 53 are vertically partitioned by the partition wall 54. In this way, the recess 53 is positioned on the side opposite to the tray 32 across the partition wall 54.

A body portion 63 of the locking mechanism 61 is provided inside the partition wall 54. The tray 32 and the recess 53 are partitioned by the partition wall 54, and the body portion 63 of the locking mechanism 61 is accommodated using a dead space inside the partition wall 54. The base end portion of the lock pin 62 enters the body portion 63 of the locking mechanism 61. The lock pin 62 protrudes from the partition wall 54 so as to sink into the recess 53. The lock pin 62 is pushed out in the protruding direction by a torsion spring (not shown). In the closed state of the lid 41, the lock pin 62 enters the lock hole 48 of the lid 41 to lock the lid 41.

A key cylinder or the like is connected to the locking mechanism 61 via a cable (not shown). When the lock pin 62 is pulled out from the lock hole 48 of the lid 41 by the cable operation, the lid 41 is unlocked. When the lid 41 is unlocked, the lid 41 is opened downward by the own weight thereof. In this way, in the lid structure 30 according to the present embodiment, the lid 41 is locked by the locking mechanism 61 outside the tray 32. Since the lock pin 62 does not protrude to the inside of the tray 32, the hand does not come into contact with the lock pin 62 when the electrical connector is connected to the charging port 27 inside the tray 32.

Here, the lid structure 30 will be described in detail. As shown in FIG. 3, the lock pin 62 is located above the upper wall of the tray 32, and the rotation shaft 45 of the lid 41 is located below the lower wall of the tray 32. That is, the lock pin 62 of the locking mechanism 61 is located on the side opposite to the rotation shaft 45 of the lid 41 across the tray 32. Since the lock pin 62 is located at a position that is farthest from the rotation shaft 45 of the lid 41, the lid 41 in the closed state is tightly locked by the lock pin 62, and the lid 41 is less likely to be pry opened. The opposite side does not need to be exactly the opposite, as long as the lock pin 62 is sufficiently far away from the rotation shaft 45.

The inner peripheral surface of the tray 32 narrows from the opening of the tray 32 toward the charging port 27. The upper wall of the tray 32 is inclined so as to become lower toward the front. The lower wall of the tray 32 is inclined so as to become slightly lower toward the front. In the present embodiment, the upper wall of the tray 32 is inclined downward by 17 degrees from the horizontal plane. In the present embodiment, the lower wall of the tray 32 is inclined downward by three degrees from the horizontal plane. The center line L1 of the charging port 27 is inclined by three degrees so as to be parallel to the lower wall of the tray 32. The inner peripheral surface of the tray 32 functions as a guide surface, so that the electrical connector can be easily connected to the charging port 27.

As described above, the body portion 63 of the locking mechanism 61 is accommodated inside the partition wall 54. The partition wall 54 is formed by the upper wall of the tray 32 and the lower wall of the recess 53. The body portion 63 of the locking mechanism 61 is accommodated in a triangular hollow space in the side view between the upper wall of the tray 32 and the lower wall of the recess 53. In this case, the body portion 63 of the locking mechanism 61 enters the charging port 27 side farther than the upper edge 34 of the opening of the tray 32. The lower end of the body portion 63 is positioned lower than the upper edge 34 of the opening of the tray 32. The locking mechanism 61 and the tray 32 are compactly provided by bringing the body portion 63 of the locking mechanism 61 close to the tray 32.

The partition wall 54 is formed such that the wall thickness increases from the distal end toward the base end. The upper wall of the tray 32 is inclined so as to become lower toward the front. The lower wall of the recess 53 is inclined so as to become higher toward the front. The upper wall of the tray 32 is inclined downward by 17 degrees from the horizontal plane. The lower wall of the recess 53 is inclined upward by 15 degrees from the horizontal plane. The distance between the upper wall of the tray 32 and the lower wall of the recess 53 increases toward the front, so that the installation space for the body portion 63 of the locking mechanism 61 is ensured inside the partition wall 54. The opening of the tray 32 is widened by the inclination of the upper wall of the tray 32, and the workability of connecting the electrical connector is improved.

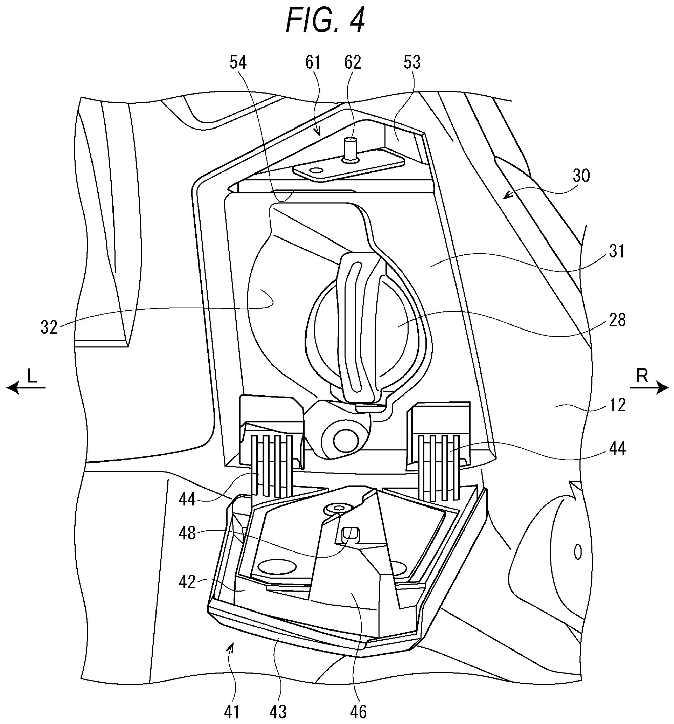

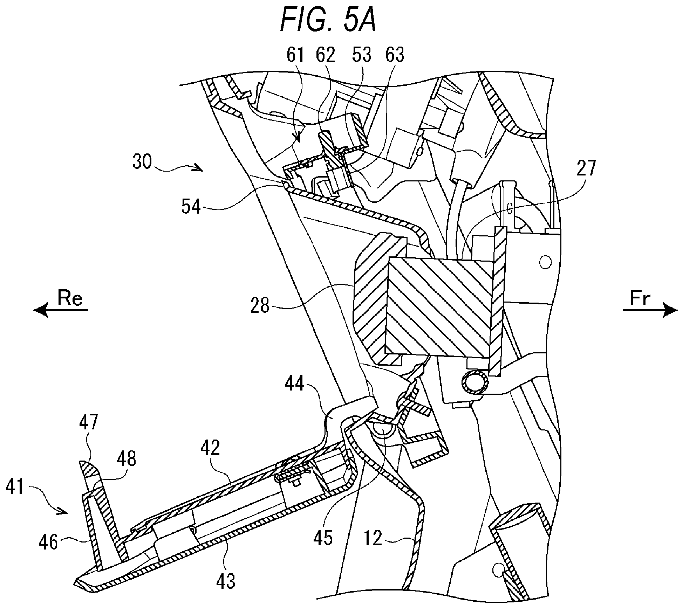

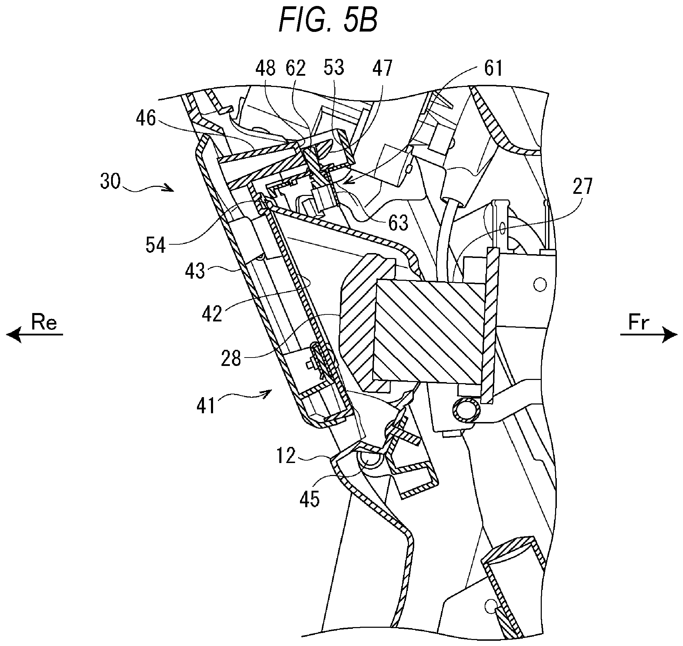

The locking operation of the lid will be described with reference to FIGS. 4, 5A and 5B. FIG. 4 is a view of the lid structure according to the present embodiment as viewed from a direction facing the lid. FIGS. 5A and 5B are operation transition views of the locking operation of the lid according to the present embodiment.
As shown in FIGS. 4 and 5A, in a state in which the lid 41 is opened downward, the opening of the tray 32 is opened, and the charging port 27 (the waterproof cap 28) faces rearward. The partition wall 54 is provided above the tray 32. The locking mechanism 61 is provided on the partition wall 54. The recess 53 is formed on the upper side of the partition wall 54. The lock pin 62 of the locking mechanism 61 protrudes from the partition wall 54 to the inside of the recess 53. As described above, since the lock pin 62 does not protrude to the inside of the tray 32, the lock pin 62 does not hit the hand of the operator or the electrical connector when the electrical connector is connected, and the connection work is not hindered.

As shown in FIG. 5B, in a case where the lid 41 is lifted from the downwardly opened state, the lock pin 62 is pushed in the retracting direction by the inclined surface 47 of the protruding portion 46 of the lid 41, and the protruding portion 46 enters the recess 53. When the lid 41 is completely closed, the lock pin 62 comes off the inclined surface 47 of the protruding portion 46, and the lock pin 62 enters the lock hole 48 of the protruding portion 46. The lid 41 is locked in the closed state by the protruding portion 46 being hooked by the lock pin 62. Since the lock pin 62 is sufficiently far away from the rotation shaft 45 of the lid 41, the lid 41 is tightly locked by the lock pin 62 and is less likely to be pry opened.

As described above, according to the lid structure 30 of the straddle-type vehicle 1 in the present embodiment, the lock pin 62 protrudes to the inside of the recess 53 on the side opposite to the tray 32 with the partition wall 54 interposed therebetween, and the protruding portion 46 of the lid 41 is locked by the lock pin 62 outside the tray 32. Since the lock pin 62 does not protrude to the inside of the tray 32, the hand of the operator or the like does not come into contact with the lock pin 62 when the electrical connector is connected, and the workability is improved. The lock pin 62 does not protrude to the inside of the tray 32, and thus a large working space can be ensured.

In the present embodiment, the lid is openable downward. Alternatively, the lid may be openable upward or laterally. For example, when the lid is openable upward, the recess is formed below the tray, when the lid is openable rightward, the recess is formed to the left of the tray, and when the lid is openable leftward, the recess is formed to the right of the tray.

In the present embodiment, the partition wall is provided with the locking mechanism. Alternatively, the lid may also be provided with the locking mechanism. For example, the protrusion may protrude from the partition wall toward the inside of the recess, and the movable hook may be provided in the locking mechanism of the lid. **In** this case, the movable hook is caught on the protrusion, so that the lid is locked in the closed state.

**In** the present embodiment, the battery is provided in the straddle-type vehicle. Alternatively, the fuel tank may be provided in the straddle-type vehicle. **In** this case, the periphery of the fuel filler of the fuel tank is covered with the tray, and the opening of the tray from which the fuel filler is exposed is covered with the lid. Even in the configuration in which the fuel tank is provided instead of the battery, the hand of the operator or the like is less likely to hit the lock pin at the time of fuel filling, and the workability is improved. The fuel tank is not limited to storing the fuel oil, and may store other fuels such as hydrogen.

**In** the present embodiment, the battery connection port is a charging port of a charging receptacle terminal or the like. Alternatively, the battery connection port may be a power supply port of a power supply socket terminal or the like.

**In** the present embodiment, the tray is formed in the front leg shield and the recess is formed by the inner member. Alternatively, both the tray and the recess may be formed in the front leg shield, or both the tray and the recess may be formed in the inner member.

**In** the present embodiment, the partition wall is formed by the front leg shield and the inner member. Alternatively, the partition wall may be formed in any one of the front leg shield and the inner member.

The lid structure according to the present embodiment is not limited to being used in the above-described straddle-type vehicle, and may be used in another vehicle such as a four-wheeled motor vehicle. The straddle-type vehicle is not limited to a general vehicle in which a driver rides on a seat in a posture of straddling the seat, and includes a scooter-type vehicle in which the driver rides on the seat without straddling the seat.

As described above, a first aspect provides a lid structure (30) for a vehicle (a straddle-type vehicle 1) in which a fuel tank or a battery (26) is provided, the lid structure (30) including: a tray (32) configured to cover a periphery of a fuel filler of the fuel tank or a connection port (a charging port 27) of the battery; and a lid (41) configured to open and close an opening of the tray through which the fuel filler or the connection port is exposed, in which a recess (53) into which an open end of the lid enters is formed on a side opposite to the tray across a partition wall (54), and a protrusion (a lock pin 62) protrudes from the partition wall to an inside of the recess to lock the lid. According to this configuration, the protrusion protrudes to the inside of the recess on the side opposite to the tray with the partition wall interposed therebetween, and the open end of the lid is locked by the protrusion outside the tray. Since the protrusion does not protrude to the inside of the tray, the hand of the operator or the like does not come into contact with the protrusion at the time of attaching and detaching the fuel filler cap or connecting the electrical connector, and the workability is improved. The protrusion does not protrude to the inside of the tray, and thus a large working space can be ensured.

A second aspect is directed to the first aspect, in which the protrusion is located on a side opposite to a rotation shaft (45) of the lid across the tray. According to this configuration, since the protrusion is located at a position that is farthest from the rotation shaft of the lid, the lid in the closed state is tightly locked by the protrusion, and the lid is less likely to be pry opened.

A third aspect is directed to the first or second aspect, in which an inner peripheral surface of the tray narrows from the opening of the tray toward the fuel filler port or the connection port. According to this configuration, the inner peripheral surface of the tray serves as a guide surface, and it is easy to connect the fuel filler nozzle or the electrical connector to the fuel filler port or the connection port.

A fourth aspect is directed to any one of the first to third aspects, in which the lid structure further includes a locking mechanism (61) configured to lock the lid in a closed state by the protrusion, and in which a body portion (63) of the locking mechanism is provided inside the partition wall. According to this configuration, although the tray and the recess are partitioned by the partition wall, the body portion of the locking mechanism can be accommodated using a dead space inside the partition wall.

A fifth aspect is directed to the fourth aspect, in which the body portion of the locking mechanism is located closer to the fuel filler port or the connection port than is an opening edge (an upper edge 34) of the tray. According to this configuration, the locking mechanism and the tray can be compactly provided.

A sixth aspect is directed to the fourth or fifth aspect, in which the partition wall is formed such that a wall thickness increases from a distal end toward a base end. According to this configuration, it is possible to ensure an installation space for the body portion of the locking mechanism inside the partition wall and to widen the opening of the tray to improve the workability of attaching and detaching the fuel filler cap and connecting the electrical connector.

Although the present embodiment has been described, a part or all of the above-described embodiment and a modification may be combined as another embodiment.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A lid structure (30) for a vehicle (1) in which a fuel tank or a battery (26) is provided, the lid structure comprising:
a tray (32) configured to cover a periphery of a fuel filler of the fuel tank or a connection port (27) of the battery; and
a lid (41) configured to open and close an opening of the tray through which the fuel filler or the connection port (27) is exposed,
wherein a recess (53) into which an open end of the lid (41) enters is formed on a side opposite to the tray (32) across a partition wall (54), and a protrusion (62) protrudes from the partition wall (54) to an inside of the recess (53) to lock the lid (41).

2. The lid structure (30) according to claim 1,
wherein the protrusion (62) is located on a side opposite to a rotation shaft (45) of the lid (41) across the tray (32).

3. The lid structure (30) according to claim 1 or 2,
wherein an inner peripheral surface of the tray (32) narrows from the opening of the tray (32) toward the fuel filler port or the connection port (26).

4. The lid structure (30) according to claim 1 or 2, further comprising
a locking mechanism (61) configured to lock the lid (41) in a closed state by the protrusion (62),
wherein a body portion (63) of the locking mechanism (61) is provided inside the partition wall (54).

5. The lid structure (30) according to claim 4,
wherein the body portion (63) of the locking mechanism (61) is located closer to the fuel filler port or the connection port (27) than is an opening edge (34) of the tray (32).

6. The lid structure (30) according to claim 4,
wherein the partition wall (54) is formed such that a wall thickness increases from a distal end toward a base end.
